Europäisches Patentamt

European Patent Office

Office européen des brevets

(19)

(11) Publication number: **0 284 336**
**A2**

(12) **EUROPEAN PATENT APPLICATION**

(21) Application number: 88302480.4

(22) Date of filing: 22.03.88

(51) Int. Cl.⁴: **B 60 K 17/348**

(30) Priority: 27.03.87 GB 8707436

(43) Date of publication of application:
28.09.88 Bulletin 88/39

(84) Designated Contracting States:
AT BE CH DE ES FR GB GR IT LI LU NL SE

(71) Applicant: GROUP LOTUS PLC
Norwich Norfolk NR14 8EZ (GB)

(72) Inventor: Lipman, John Michael
Group Lotus plc Norwich
Norfolk NR14 8EZ (GB)

(74) Representative: Jones, Ian et al
G. RATHBONE & CO. High Holborn House 52-54 High
Holborn
London WC1V 6RY (GB)

(54) **Four-wheel vehicle drive system.**

(57) A vehicle with four-wheel drive has a viscous coupling unit coupling together one of the front and rear axle pairs and differential gearing coupling together the other of the axle pairs, the unit accommodating speed differences between the two axle pairs as well as that between the axles of the pair to which it is connected. The drive from the vehicle motor may be supplied to the front or rear axle pair, either of which can be coupled by the viscous coupling unit.

FIG. 2.

EP 0 284 336 A2

## Description

## FOUR-WHEEL VEHICLE DRIVE SYSTEM

The invention relates to four-wheel drive systems for a vehicle.

A drive system for a vehicle having four-wheel drive, with longitudinally spaced front and rear axles or pairs of axles, must include means for accommodating not only rotational speed differences between the axles of each of the front and rear axle pairs, as is conventionally done by use of differential gearing, but also between the front and rear axles. Growing recognition of the advantages of four-wheel drive systems, even for mass-production road vehicles, has prompted the adoption of a simple solution to the problem, namely, the provision of a viscous coupling unit, that is, a power transmitting structure employing a viscous fluid, between the ends of the transmission shaft by which the drive is carried between the front and rear axles. This solution can be quite readily carried into effect, but involves the cost and weight disadvantages of the added viscous coupling unit.

The present invention is therefore concerned with the provision of a four-wheel drive system requiring minimal necessary parts.

The invention accordingly provides a four-wheel drive system in which the drive is applied to one of the front and rear axle pairs through differential gearing and to the other of the axle pairs through a viscous coupling unit.

In such a system, the viscous coupling unit is able to accommodate not only rotational differences between the axles of the axle pair with which it is associated, but also between that axle pair and the other axle pair. The viscous coupling unit may be employed in accordance with the invention between either the front or the rear axle pair, whether the vehicle has a front or rear mounted engine.

It will be evident that the invention provides saving in cost and weight in as far as a differential unit is omitted from the system. Moreover, limited axle slip capability is obtained and side-to-side wheel spin is controlled.

The invention is further described below, by way of illustration, with reference to the accompanying drawings, in which:

Figure 1 is a largely schematic plan view of a conventional four-wheel drive system for a road vehicle;

Figure 2 is a similar view of a first four-wheel drive system embodying the present invention; and

Figures 3 and 4 are views similar to those of Figures 1 and 2 of second and third four-wheel drive systems embodying the present invention.

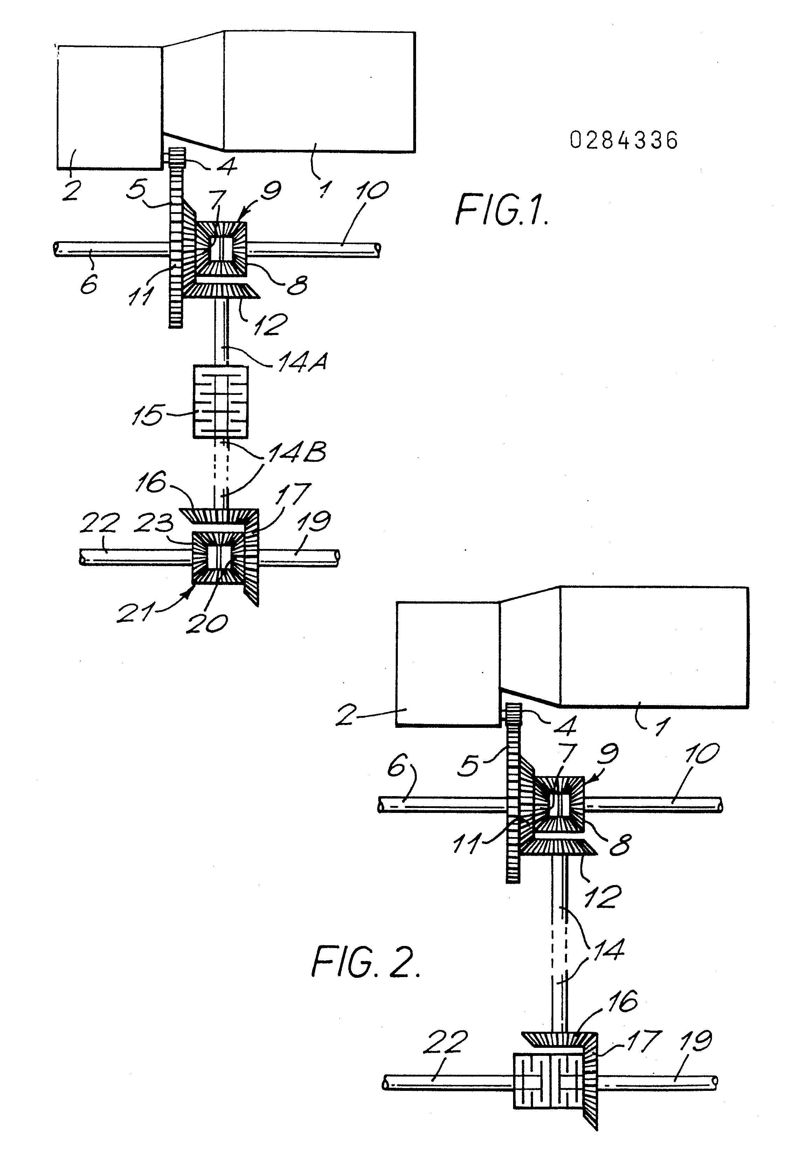

The simple conventional four-wheel drive system illustrated in Figure 1 takes its drive from an engine 1 through a gearbox 2, which may be manual or automatic, to a pinion 4 meshing with a gearwheel 5 secured to a front axle 6. The gearwheel 5 is connected to a differential gear unit 9 which may be of the epicyclic type or of the bevel type as shown. Side gears 7 and 8 of the differential gear unit 9 are coaxially connected to the front axle 6 and to the other front axle 10 respectively.

The drive torque is applied to the rear wheels by means of a crown wheel 11 of bevel gearing, the crown wheel being secured to the gearwheel 5. The second pinion 12 of the bevel gearing is secured to a transmission shaft having front and rear parts 14A and 14B connected together by a viscous coupling unit 15. The rear transmission shaft part 14B extends to a pinion 16 of a further bevel gear of which the crown wheel 17 is connected to a second differential gear unit 21 which may again be of the epicyclic type, or of the bevel type as shown. Side gears 20 and 23 of the unit 21 are coaxially connected to rear axles 19 and 22 respectively.

Thus, the differential gear units 9 and 21 accommodate differences in rotational speed between the front axles 6 and 10 and between the rear axles 19 and 22 respectively, whilst the viscous coupling unit 15 accommodates differences in rotational speed between the front and rear axles.

In Figures 2, 3 and 4, parts corresponding to those shown in Figure 1 are indicated by the same reference numerals, and are accordingly not further described.

In the four-wheel drive system of the invention shown in Figure 2, the drive arrangements for the front wheels, by way of the front axles 6 and 10, are in all respects similar to those of Figure 1. Similarly, the drive from the gearbox 2 is carried to the rear axles 17 and 21 by way of a transmission shaft 14 connected to the bevel gearing pinion 12. The transmission shaft 14 is however not split into two parts in this system, but is unitary, the viscous coupling unit 15 being consequently omitted. Moreover, the crown wheel 17 of the rear bevel gearing is connected to a viscous coupling which independently drives the rear axles. Therefore no differential gear unit is required at the rear axles.

The viscous coupling unit 25 will be seen to fulfil both the function of a rear differential unit, by allowing a slip between the two rear axles, and also the function of the coupling unit 15 of Figure 1, by accommodating speed differences between the front and rear axles.

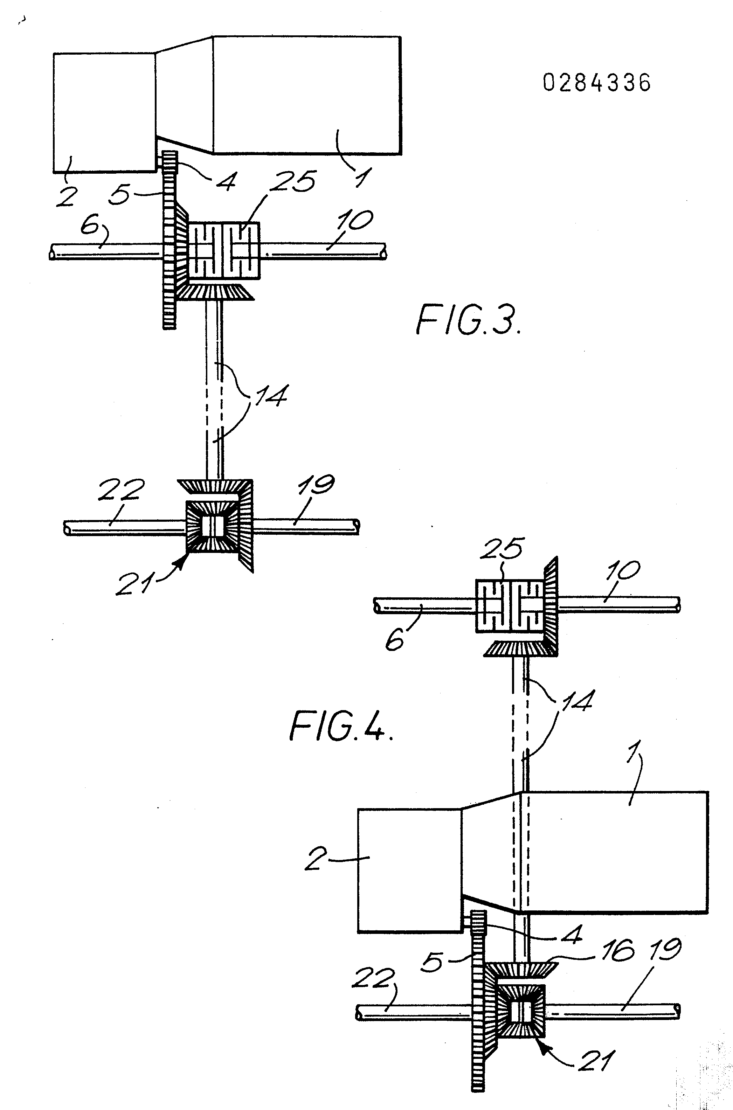

The four-wheel drive system of Figure 3 resembles that of Figure 2 in employing a unitary transmission shaft 14 between the front and rear bevel gearings, but differs from the system of Figure 1 in that the viscous coupling unit 25 replaces not the rear axle differential unit 21 but the front axle differential unit 9. It will be evident that the viscous coupling unit 25 provides the same functions in the system of Figure 3 as the corresponding unit does in the system of Figure 2.

The four-wheel drive system of Figure 4 is for use in a vehicle having a rear mounted engine 1 and gearbox 2. The gearbox output is there supplied to the rear axles through a pinion 4 and gearwheel 5, which drives the rear differential unit 21, and to the front axles via bevel gearing and a unitary transmission shaft 14. The viscous coupling unit 25 is connected between the two front axles 6 and 10 and again serves both the function of a front axle differential unit and that of a means for accommodating rotational differences between the front and rear axles.

It will be appreciated that the system of Figure 4 could be modified to incorporate the viscous coupling unit 25 between the rear axles 19 and 22 instead of between the front axles as shown.

It will be evident that the invention can be embodied in a variety of ways other than those specifically described and illustrated.

**Claims**

1. A four-wheel vehicle drive system comprising first (6,10) and second (19,22) pairs of aligned axles spaced apart longitudinally of the vehicle, and means for applying a drive to both pairs of axles including differential gearing (9;21) operative between one of the two axle pairs and a viscous coupling unit (25) operative between the other of the two axle pairs.

2. A system as claimed in claim 1 wherein drive from a motor (1) is applied to one axle (6;22) of one of the axle pairs by means of a gear train (4,5) and to one axle (10;19) of the other of the axle pairs by means of the transmission shaft (14) and further gearing (11,12,16,17) it.

3. A system as claimed in claim 1 or 2 wherein the motor drive is applied to the axle of the axle pair (6,10) coupled together by the viscous coupling unit (25).

4. A system as claimed in claim 1 or 2 wherein the motor drive is applied to the axle of the axle pair (19,22) coupled together by the differential gearing (9;21).

5. A vehicle comprising a front and a rear pair of aligned axles (6,10 & 19,22), a motor (1) driving one axle (6;22) of one of the axle pairs through first gearing (2,4,5) and additionally driving a transmission shaft (14) through second gearing (11,12), the transmission shaft (14) driving an axle of the other of the axle pairs through third gearing (16,17), differential gearing (9;21) coupling together the axles of one of the axle pairs, and a viscous coupling unit coupling together the axles of the other axle pairs.

6. A vehicle as claimed in claim 5 wherein the motor (1) drives one axle (6) of the front axle pair.

7. A vehicle as claimed in claim 5 wherein the motor (1) drives one axle (22) of the rear axle pair.

8. A vehicle as claimed in claim 5, 6 or 7 wherein the differential gearing (9) couples together the front axle pair (6,10) and the viscous coupling unit (25) couples together the rear axle pair (19,22).

9. A vehicle as claimed in claim 5, 6 or 7 wherein the viscous coupling unit (25) couples together the front axle pair (6,10) and the differential gearing (21) couples together the rear axle pair (19,22).

0284336

FIG.1.

FIG. 2.

0284336

FIG.3.

FIG.4.